# EUROPEAN PATENT APPLICATION

(11) **EP 4 701 207 A1**
(43) Date of publication of application: **25.02.2026**
(21) Application number: 24792062.2
(22) Date of filing: 17.04.2024
(51) Int. Cl.: H04N 21/4402

(54) **CONTENT SHARING METHOD AND APPARATUS, DEVICE, AND STORAGE MEDIUM**

(30) Priority: 18.04.2023 CN 202310418372
(71) Applicant: Beijing Zitiao Network Technology Co., Ltd., Beijing 100190 (CN)
(72) Inventor: XU, Qi, Beijing 100028 (CN); SONG, Xin, Beijing 100028 (CN)
(74) Representative: Grünecker Patent- und Rechtsanwälte PartG mbB
(86) International application number: PCT/CN2024/088454
(87) International publication number: WO 2024/217477

(57) **Abstract**

Embodiments of the disclosure relate to a method, an apparatus, a device and a storage medium for sharing content. The proposed method includes: receiving a sharing request for a target media content; and controlling, based on the sharing request, posting of a target sharing content associated with the target media content, wherein the target sharing content comprises a media content generated, independent from a user editing operation, based on the target media content, the target sharing content comprising a first media content picture generated by applying a predetermined style to a second media picture in the target media content.

## Description

The present application claims priority to Chinese Patent Application No. 202310418372.5, filed on April 18, 2023, and entitled "METHOD, APPARATUS, DEVICE AND STORAGE MEDIUM OF SHARING CONTENT", the entirety content of which is incorporated herein by reference.

### FIELD

Example embodiments of the present disclosure generally relate to the field of computers, and in particular, to a method, an apparatus, a device, and a computer-readable storage medium of sharing content.

### BACKGROUND

With the development of computer technologies, the Internet has become an important source for people to obtain various contents. People may create content on the Internet or share content to other people. In particular, for media content, more and more posters or creators desire broader sharing of their contents. Therefore, how to more conveniently support users in sharing content is a focal point of attention.

### SUMMARY

In a first aspect of the present disclosure, a method of sharing content is provided. The method includes: receiving a sharing request for a target media content; and controlling, based on the sharing request, posting of a target sharing content associated with the target media content, wherein the target sharing content includes a media content generated, independent from a user editing operation, based on the target media content, the target sharing content including a first media content picture generated by applying a predetermined style to a second media picture in the target media content.

In a second aspect of the present disclosure, an apparatus for sharing content is provided. The apparatus includes: a receiving module configured to receive a sharing request for a target media content; and a control module configured to control, based on the sharing request, posting of a target sharing content associated with the target media content, wherein the target sharing content includes a media content generated, independent from a user editing operation, based on the target media content, the target sharing content including a first media content picture generated by applying a predetermined style to a second media picture in the target media content.

In a third aspect of the present disclosure, an electronic device is provided. The device includes at least one processing unit; at least one memory coupled to the at least one processing unit and storing instructions for execution by the at least one processing unit, the instructions, when executed by the at least one processing unit, causing the electronic device to perform the method of the first aspect.

In a fourth aspect of the present disclosure, a computer-readable storage medium is provided. The computer-readable storage medium having stored thereon a computer program which is executable by a processor to perform the method of the first aspect.

It should be understood that the summary described in this disclosure is not intended to limit key features or important features of implementations in the present disclosure, nor is it intended to limit the scope in the present disclosure. Other features in the present disclosure will become readily understood from the following description.

### BRIEF DESCRIPTION OF DRAWINGS

The above and other features, advantages, and aspects of the various embodiments in the present disclosure will become more apparent from the following detailed description taken in combination with the accompanying drawings. In the drawings, the same or similar reference numbers refer to the same or similar elements, wherein:
FIG. 1 illustrates a schematic diagram of an example environment in which embodiments according to the present disclosure may be implemented;
FIGS. 2A-2F illustrate example interfaces for a process of sharing content according to some embodiments of the present disclosure;
FIGS. 3A-3C illustrate example interfaces for a process of sharing content according to further embodiments of the present disclosure;
FIG. 4 illustrates a flowchart of an example process of sharing content according to some embodiments of the present disclosure;
FIG. 5 illustrates a schematic structural block diagram of an apparatus for sharing content according to some embodiments of the present disclosure; and
FIG. 6 illustrates a block diagram of an electronic device capable of implementing various embodiments of the present disclosure.

### DETAILED DESCRIPTION

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

It should be noted that the headline of any section/subsection provided in the specification is not limiting. Various embodiments are described throughout the specification and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the term "including" and similar terms would be appreciated as open-ended inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. The terms "first," "second," and the like may refer to different or same objects. Other explicit and implicit definitions may also be included below.

The embodiments in the present disclosure may relate to user data, acquisition and/or use of data, and the like. These aspects shall comply with the requirements of corresponding laws, regulations and relevant provisions. In the embodiments in the present disclosure, the collection, acquisition, processing, manufacturing, forwarding, use of all data and the like are carried out with user's knowledge and consent. Accordingly, in the implementation of the embodiments in the present disclosure, users should be informed of the type, the scope of use, the use scenario, etc., of the involved data or information in an appropriate manner and provide authorization in accordance with relevant laws and regulations. The specific ways of being informed and providing authorization may vary according to actual circumstances and application scenarios, and the scope of this disclosure is not limited in this regard.

In the solutions and embodiments in this disclosure, if personal information processing is involved, it will be carried out based on legitimate grounds (such as obtaining consent from the data subject, or as required to fulfill a contract, etc.) and will be performed only within a specified or agreed scope. If users decline the processing of personal information beyond what is essential for basic functionalities, their utilization of these basic features remains uninterrupted.

As briefly mentioned above, for Internet content, sharing content is one of the most commonly used interactive functions in people's daily lives. Conventionally, in the process for sharing media content, a user needs to edit and process such media content to achieve sharing media content. Such an operation process may consume a certain amount of time of the user, resulting in some users may lose motivation for sharing content due to this process.

The embodiment of the present disclosure provides a solution for sharing content. According to this solution, a sharing request for target media content (e.g., picture content, video content, audio content, or a combination of such content) may be received. Further, posting of a target sharing content associated with the target media content may be controlled based on the sharing request. Such target sharing content may include a media content generated, independent from a user editing operation, based on the target media content. In addition, the target sharing content may include a first media content picture generated by applying a predetermined style to a second media picture in the target media content.

In this way, the embodiments of the present disclosure may support the user to quickly share the target media content without editing, and may enable the picture of the sharing content to be automatically generated based on the picture of the content to be shared. Therefore, the convenience level for user sharing the content may be greatly improved, and the enthusiasm for user sharing the content may be improved.

Various example implementations of this solution are described in detail below in combination with the accompanying drawings.

### Example Environment

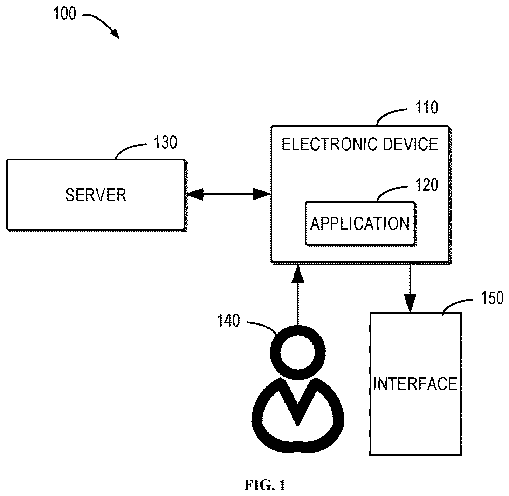

FIG. 1 illustrates a schematic diagram of an example environment 100 in which embodiments of the present disclosure can be implemented. As shown in FIG. 1, the example environment 100 may include an electronic device 110.

In this example environment 100, the electronic device 110 may run an application 120 that supports sharing content. The application 120 may be any suitable type of application for sharing content, examples of which may include, but are not limited to: video applications, social applications, editing applications. A user 140 may interact with the application 120 via the electronic device 110 and/or its attachment device.

In the environment 100 of FIG. 1, if the application 120 is active, the electronic device 110 may present, via the application 120, an interface 150 for supporting sharing content.

In some embodiments, the electronic device 110 communicates with a server 130 to carry out provision of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination thereof, including accessories and peripherals of these devices or any combination thereof. In some embodiments, the electronic device 110 can also support any type of interface for a user (such as a "wearable" circuit, etc.).

The server 130 may be a standalone physical server, a server cluster or a distributed system composed of multiple physical servers, or may also be a cloud server that provides basic cloud computing services such as cloud services, cloud databases, cloud computing, cloud functions, cloud storage, network services, cloud communication, middleware services, domain name services, security services, content distribution networks, and big data and artificial intelligence platforms. The server 130 may include, for example, a computing system/server, such as a mainframe, an edge computing node, a computing device in cloud environments, or the like. The server 130 may provide background services for the application 120 that support virtual scenes in the electronic device 110.

A communication connection may be established between the server 130 and the electronic device 110. The communication connection may be established via wired or wireless manners. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In the embodiments of the present disclosure, the server 130 and the electronic device 110 may implement signaling interaction through the communication connection between the server 130 and the electronic device 110.

It should be understood that the structures and functions of the various elements in the environment 100 are described solely for example purposes and do not imply any limitation on the scope of the present disclosure.

Some example embodiments of the present disclosure will continue to be described below with reference to the accompanying drawings.

### Example Content Sharing

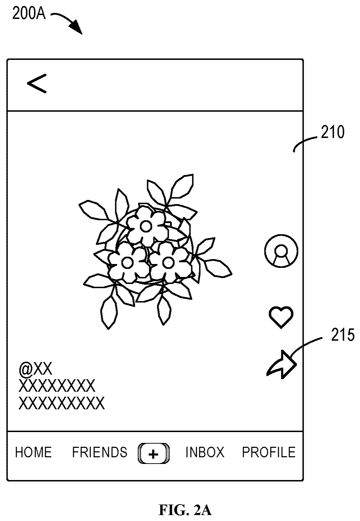

An example content sharing process according to some embodiments of the present disclosure will be described below with reference to FIGS. 2A-2F. FIGS. 2A-2F illustrate example interfaces, which may be provided by the electronic device 110 shown in FIG. 1, for example, in accordance with some embodiments of the present disclosure. Specifically, the electronic device 110 may, for example, utilize the installed application 120 to present such an example interface.

First referring to FIG. 2A, FIG. 2A illustrates a presentation interface 200A of target media content 210. In the interface 200A, a content presentation area for presenting target media content 210 may be included. As introduced above, such target media content may include, for example, picture content, video content, audio content, and/or a combination of the above. It may be understood that the presentation interface may be a presentation interface of media content posted by the user himself/herself, or a presentation interface of media content posted by other users.

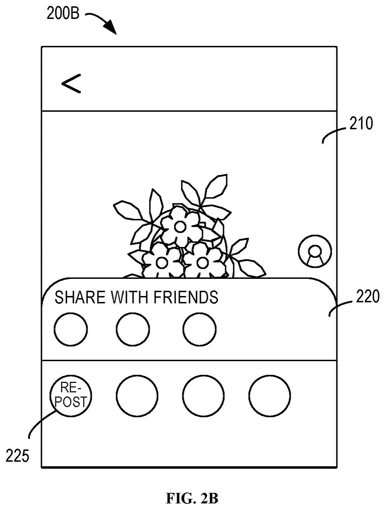

As shown in FIG. 2A, the interface 200A may include a sharing control 215. In a situation where the sharing control 215 is triggered (e.g., clicked), as shown in FIG. 2B, the electronic device 110 may present the sharing panel 220 in an interface 200B.

In the sharing panel 220, the electronic device 110 may provide a sharing portal, such as a sharing portal 225. Such a sharing portal may include, for example, a target sharing portal 225 that supports reposting without editing. The present disclosure is not intended to limit the style or function of other sharing portals.

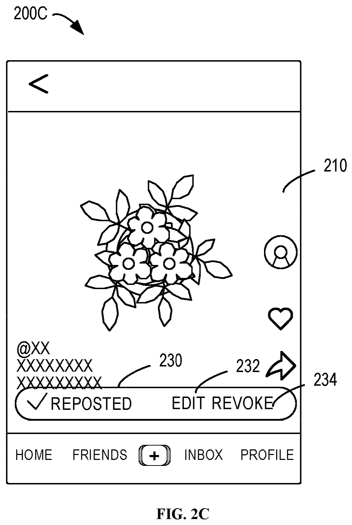

In some embodiments, after receiving the triggering operation on the target sharing portal 225, the electronic device 110 may present an interface 200C shown in FIG. 2C. The interface 200C may also correspond to, for example, a presentation interface of the target media content 210.

As shown in FIG. 2C, different from the interface 200A, the interface 200C may further provide at least one state control 230. In some embodiments, the state control 230 may characterize a generation state and/or a posting state of the target sharing content, for example. Taking FIG. 2C as an example, the text "reposted" may, for example, indicate that the user has triggered the generation and reposting process of the target sharing content. It should be understood that the copy "reposted" herein is not intended to indicate that the corresponding target sharing content has completed generation and / or has been posted.

In some embodiments, the triggering operation on the target sharing portal 225 may trigger a content generation process of generating the target sharing content. Such a content generation process may be performed locally at the electronic device 110, or at other electronic devices (e.g., the server 130).

Further, the electronic device 110 may control posting the target sharing content based on the operating state of the state control 230 within the predetermined time. It may be understood that the target sharing content being posted refers to that the target sharing content is posted as a user work, that is, the target sharing content is already visible as the user work to a set of target users set by the poster at the time of posting.

In some embodiments, if a first predetermined operation associated with the state control 230 is detected within the predetermined time, the electronic device 110 may control to post the target sharing content accordingly. The operations associated with the state control 230 may include, for example, any suitable operations received in the current interface with the state control 230 being in a presented state, regardless of whether the operation is performed for the state control 230.

In some embodiments, the first predetermined operation may include a predetermined operation ceasing the presenting of the presentation interface state control. For example, the first predetermined operation may be a switching operation for media content in the media content stream, and the presentation interface target media content is included in the presentation interface target media content stream, or the presentation interface first predetermined operation may be a redirect operation for redirecting to the profile page of the author of the target media content; in some other embodiments, the current interface further includes a state control disabling control or a posting confirmation, and the first predetermined operation may further be a triggering operation on the presentation interface state control disabling control or the posting confirmation control. After detecting the first predetermined operation associated with the state control within the predetermined time, the target sharing work is posted as the user work.

For example, if the user slides the browsed media content up and down during the presenting of the state control 230, the electronic device 110 may correspondingly control the target sharing content to be posted accordingly. As another example, if the user slides the state control 230 down, for example, to close the control, the electronic device 110 may also control the target sharing content to be posted correspondingly, for example.

Alternatively or in addition, if a second predetermined operation associated with the state control 230 fails to be detected within a predetermined time, the electronic device 110 may also control the target sharing content to be posted accordingly. In some embodiments, the second predetermined operation associated with the state control 230 may include an operation causing the posting process to be cancelled. For example, if the user does not perform any operation within the predetermined time, the electronic device 110 may also automatically control posting of the target sharing content accordingly. Alternatively, if the user does not perform the triggering operation for a revoking portal 234 as discussed below within the predetermined time, the electronic device 110 may also automatically control the target sharing content to be posted accordingly. When the second predetermined operation associated with the state control is detected within the predetermined time, the target sharing work is posted as the user work.

In some embodiments, as shown in FIG. 2C, the state control 230 may include, for example, a revoking portal 234. In response to receiving a triggering operation for the revoking portal 234, the electronic device 110 may cease posting the target sharing content.

In some embodiments, a length of the predetermined time presented by the state control 230 may be, for example, a predetermined time length. Alternatively, the length of the predetermined time presented by the state control 230 may also be determined based on the time length required for the generation process of generating the target media content.

For example, if the state control 230 does not receive the predetermined operation within the predetermined time, the electronic device 110 may further cease presenting the state control 230 after the predetermined time expires, to indicate that the corresponding target sharing content is being posted or has been posted. As another example, the electronic device 110 may also change the display of the state control 230 to indicate an updated generation state and/or a posting state of the target sharing content, for example, indicate that the corresponding target sharing content is being generated, is being posted, or has been posted.

An example of a single state control 230 is shown in the example of FIG. 2C. In some embodiments, the electronic device 110 may further provide a plurality of state controls. For example, the editing portal and/or the revoking portal may be provided independently as an additional state control. Additionally, such additional state control may also be configured with the same or different predetermined times, for example.

As an example, the electronic device 110 may provide a first state control associated with the text prompt, a second state control corresponding to the revoking portal, and a third state control corresponding to the editing portal. Such the first state control, the second state control, and the third state control may also be associated with the same or different predetermined times, for example.

For example, when the user does not perform the predetermined operation within the same predetermined time period, the presenting of the three state controls may be ceased at the same time. Alternatively, when the user does not perform the predetermined operation within the first time period, the presenting of the second state control and the third state control may be ceased. Further, when the user does not perform the predetermined operation within a longer second time period, the presenting of the first state control may be further ceased.

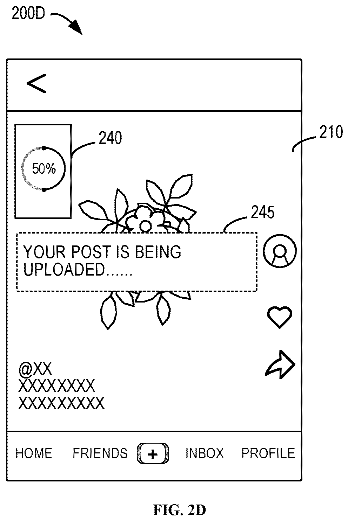

For example, as shown in FIG. 2D, the electronic device 110 may further present an interface element 240 and/or an interface element 245 for indicating a posting progress of the target sharing content. Such the presenting of the interface elements 240 and/or 245 may, for example, be ceased in response to a user switching to other interfaces (e.g., switching to browse other media content), or continue to remain presented.

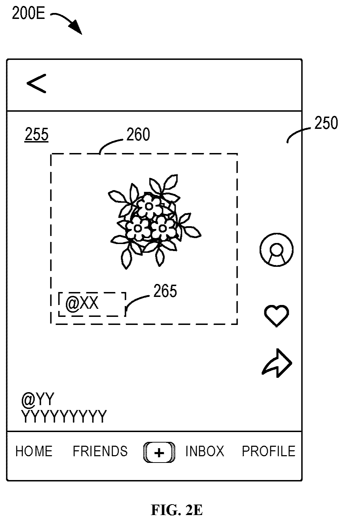

After the target sharing content is posted, the current user and/or other appropriate user may, for example, view the target sharing content through the electronic device. For example, the target sharing content is posted as a personal work of the current user, and other users are supported to view the work on the profile page of the current user. FIG. 2E illustrates an example presentation interface 200E of a target sharing content 250, which may be presented, for example, by the electronic device 110 or other suitable electronic device.

As shown in FIG. 2E, such target sharing content 250 may include a first media picture 255, which may be generated by applying a predetermined style to a second media picture 260 in the target media content 210. Such the predetermined style may correspond to one or more predetermined image processing solutions, for example. Thus, the electronic device 110 may apply the corresponding one or more image processing solutions to the second media picture 260 to generate a new first media picture 255. For example, the size or shape of the second media picture is adjusted. Thus, the first media picture 255 may present a picture style different from the picture style of the second media picture 260 to indicate that it corresponds to the shared media content.

**It** may be understood that the first media picture may be generated by combining the second media picture with a predetermined visual element, and the predetermined visual element may be determined based on the target media content. The predetermined visual element may include at least one of a video, picture, and text. For example, the generated display layout, picture color, or other visual picture information and the like of the first media picture 255 is different from the second media picture 260, enabling the user to perceive more easily that the work is a reposted sharing work. For example, such a predetermined style may include a picture-in-picture style. That is, the second media picture 260 of the target media content 210 may be scaled down and set as a part of the first media picture 255, rather than the entirety. In some embodiments, such a predetermined style may also include other suitable styles. For example, a background picture of the first media picture 255 may be obtained based on the second media picture 260, utilizing a visual element where the background picture is generated with a color associated with the second media picture 260, and overlaying the second media picture 260 and the predetermined visual element on the background picture to obtain the first media picture 255.

**In** some embodiments, as shown in FIG. 2E, the predetermined style may indicate that, in addition to the second media picture 260, the first media picture 250 may further include at least one visual element 265. Such at least one visual element 265 may be generated, for example, based on the target media content 210. For example, as shown in FIG. 2E, visual element 265 may indicate information of a poster of the target media content 210.

In other examples, the visual element 265 may also indicate other suitable information of the target media content 210, examples of which may include, but are not limited to: posting time, browsing information, like information, comment information, favoriting information, and media content description information, and the like. It should be understood that the generation and/or presentation of the target sharing content should be based on the permissions of the poster of the target media content 210.

Based on this manner, the embodiments of the present disclosure may control, independent from the user editing operation, sharing the target sharing content correspondingly according to the sharing request of the user. It should be understood that "independent from the user editing operation" is intended to indicate that the user does not need to enter the editing interface of the target sharing content, that is, the corresponding target sharing content may be generated and posted quickly according to the predetermined style.

In some embodiments, considering that such a quick sharing is independent from the user editing operation, the electronic device 110 may also provide an editing portal for posted target sharing content 250, for example. In some embodiments, the electronic device 110 may provide a corresponding editing portal in a presentation interface of the posted target sharing content 250. It may be understood that the posted target sharing content includes media content that has been posted as a user work, that is, the target sharing content has been visible to the set of target users set by the user at the time of posting. For example, the electronic device 110 may provide the editing portal for the posted target sharing content 250 on the profile page of the user.

Further, after receiving the editing request for the posted target sharing content, the electronic device 110 may present an editing interface (also referred to as a second editing interface) for editing the posted target sharing content. That is, the terminal device 110 may provide a "post-first, edit-later" sharing logic, supporting quick sharing of the user, and reducing sharing cost of the user.

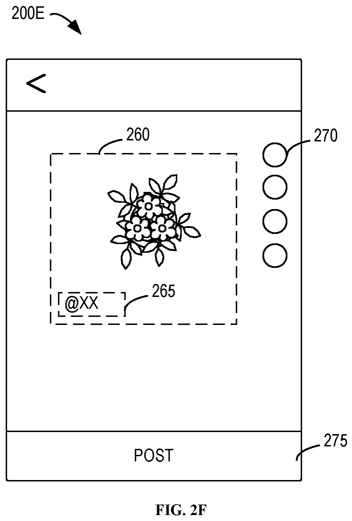

In some embodiments, such an editing interface may include an interface 200F as shown in FIG. 2F. Such editing interface may include, for example, supporting the user for modifications to the display style of the second media screen 260, modifications to the at least one visual element 265 generated based on the target media content 210, and the like.

For example, as shown in FIG. 2F, the interface 200F may, for example, provide a set of controls 270. Such a set of controls 270 may include, for example, a first control for adding new visual elements (e.g., stickers, text, etc.). Alternatively, such a set of controls 270 may also include, for example, a second control for changing the predetermined style applied to the second media picture 260. Additionally, the set of controls 270 may further include, for example, a third control configured to obtain predetermined audio information, where the predetermined audio is configured to generate the target sharing content 250 in combination with the target media content.

Additionally, the interface 200F may also include a post control 275, for example. After the user completes the editing operation, the user may trigger the posting control 275 to post new sharing content generated based on the editing operation. Thus, the posted target sharing content may be replaced with the updated sharing content.

In this way, the embodiments of the present disclosure may support "edit-later" of the sharing content already posted by the user, thereby ensuring sharing efficiency while also supporting the creative freedom of the user.

In some embodiments, continuing reference to FIG. 2C, the state control 230 may also include, for example, an editing portal 232. In a situation where a triggering operation for the editing portal 232 is received, the electronic device 110 may present an editing interface (also referred to as a first editing interface).

The editing interface corresponding to the editing portal 232 may, for example, be similar to the interface 200F discussed with reference to FIG. 2F. Differently, the editing interface corresponding to the editing portal 232 may be provided, for example, when the target sharing content has not yet been posted. In addition, the user may perform the editing operation in the editing interface, or may post directly without performing the editing operation. Correspondingly, the corresponding sharing content may be correspondingly posted based on at least one operation in the editing interface.

For example, the electronic device 110 may receive, through the first editing interface, at least one editing operation for an initial sharing content to generate the updated sharing content. For example, the user may perform at least one editing operation for the initial sharing content through the first editing interface. Such initial sharing content may be generated, for example, based on the target media content 210. In an example, the initial sharing content may be, for example, have the same style as the target sharing content 250.

Such editing operations may, for example, be similar to one or more operations performed with an editing control as discussed with reference to FIG. 2F. For example, a new visual element is added, a predetermined style is modified, a new audio content is obtained, and the like.

Further, the electronic device 110 may receive a posting request for the updated shared content through the first editing interface, and control the posting of the updated sharing content accordingly.

Based on the above process, the embodiments of the present disclosure may provide the user with the ability to directly share target media content without editing. In addition, in some embodiments, the ability to perform "edit-later" on media content that has already been triggered for posting is also provided, facilitating further editing by the user. As a result, the embodiments of the present disclosure enable the user to choose reposting method flexibly. For the user who do not edit the target sharing content, the reposting path may be shortened, thereby improving the efficiency of sharing of the user; for the user who desires to edit the target sharing content, a quick editing portal is provided to facilitate editing the target sharing content before posting.

In some embodiments, in addition to the presentation logic of the target sharing portal 225 discussed above with reference to FIGS. 2A and 2B, embodiments of the present disclosure may also support initiating a sharing request for the target media content based on other suitable interaction processes.

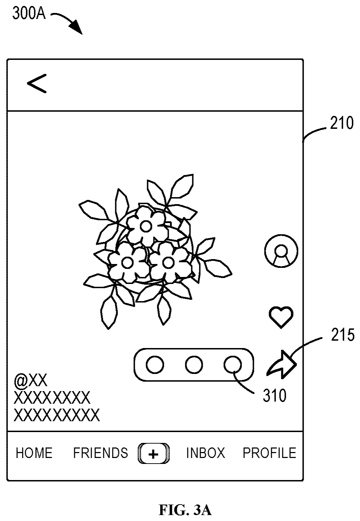

FIG**.** 3A illustrates an example interface 300A according to some embodiments of the present disclosure. As shown in FIG. 3A, the interface 300A may correspond to, for example, the presentation interface of the target media content 210. As shown in FIG. 3A, after receiving the predetermined operation (for example, a long-press operation) for the sharing control 215, the electronic device 110 may present the sharing portal, for example, the target sharing portal 310. In a situation where the user triggers the target sharing portal 310, the interface 200C as discussed above with reference to FIG. 2C may be triggered, for example.

In some embodiments, as shown in FIG. 3A, the target sharing portal 310 may be presented for example associated with the sharing control 215 in the interface 300A. For example, the target sharing portal 310 may be presented adjacent to the sharing control 215.

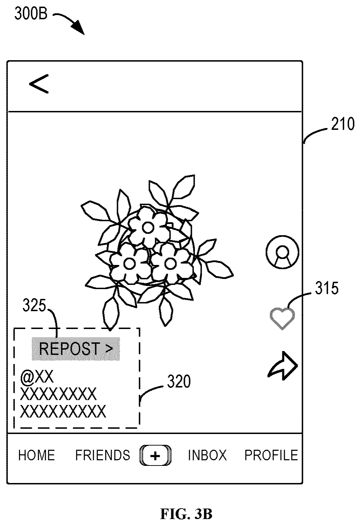

In some embodiments, the sharing panel 220 as shown in FIG. 2B and/or the target sharing portal 310 as shown in FIG. 3B may also be presented in response to the predetermined operation of the user for the target media content in the presentation interface. For example, the user may trigger the presentation of the sharing panel 220 as shown in FIG. 2B and/or the target sharing portal 310 as shown in FIG. 3B by long-pressing the target media content 210 in the interface 200A.

In further embodiments, the presentation of the target sharing portal may also be based on a particular interaction operation by the user for the target media content 210. Specifically, in a situation where the target interaction operation associated with the target media content is received, the electronic device 110 may present the target sharing portal in the presentation interface of the target media content.

In an example, as shown in FIG. 3B, after the user triggers the like control 315 in the interface 300B to complete a like operation, the electronic device 110 may, for example, present the target sharing portal 325 in the interface 300B. In a situation where the user triggers the target sharing portal 325, the interface 200C as discussed above with reference to FIG. 2C may be triggered, for example.

As shown in FIG. 3B, the target sharing portal 325 may include a sharing label, which may be displayed in a description area 320 of the presentation interface 300B. For example, the description area 320 may be configured to display description information associated with the target media content 210, for example, poster information, content description information added by the poster, and the like.

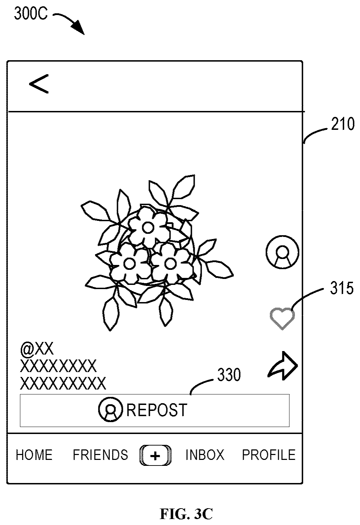

In another example, as shown in FIG. 3C, after the user triggers the like control 315 in the interface 300C to complete the like operation, the electronic device 110 may, for example, present the target sharing portal 330 in the interface 300B. In a situation where the user triggers the target sharing portal 330, the interface 200C as discussed above with reference to FIG. 2C may be triggered, for example.

As shown in FIG. 3C, the target sharing entry 330 may include a sharing button, which may be displayed, for example, in a content presentation area of the presentation interface 300C. The content presentation area is configured to play the target media content 210, that is, the presentation interface 300 may be a playback page of the target media content. In some embodiments, the sharing button may further display a visual identifier (for example, an avatar) corresponding to the current user, to prompt the current user to repost the current target media content as reposting work of the user.

In some embodiments, the target interaction operation triggering the target sharing portal 325 and/or the target sharing portal 330 as discussed with reference to FIGS. 3B-3C may include appropriate interaction operations related to the target media content 210, examples of which may include: a like operations, a comment operations, a favoriting operations, a following operations, and the like.

In this way, the portal for directly sharing without editing is provided to the user only when it is determined that the user has an interaction interest in the currently playing target media content 210, thereby reducing the interference to the user browsing content.

### Example Processes

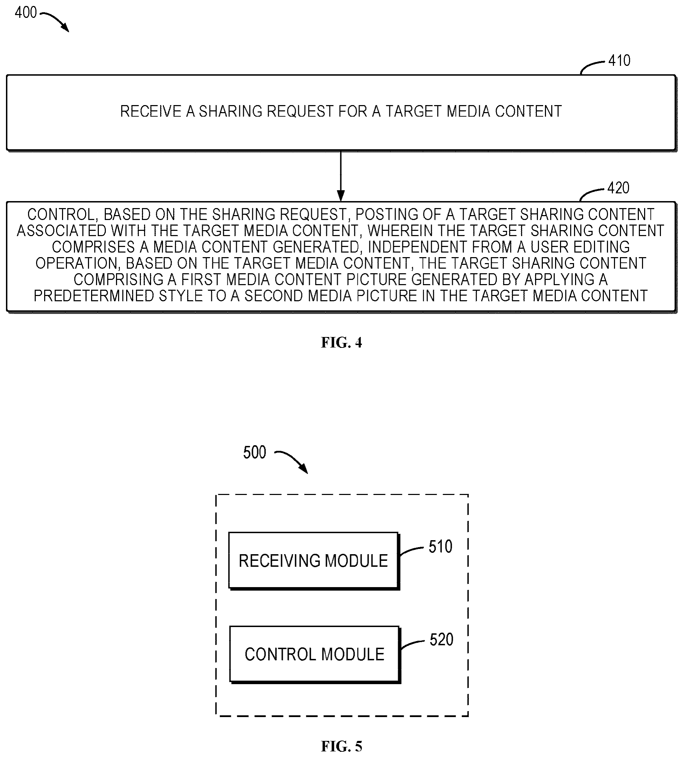

FIG. 4 illustrates a flowchart of an example process 400 of sharing content according to some embodiments of the present disclosure. Process 200 may be performed at the electronic device 110. The process 200 is described below with reference to FIG. 1.

As shown in FIG. 4, at block 410, the electronic device 110 receives a sharing request for a target media content.

At block 420, the electronic device 110 controlling, based on the sharing request, posting of a target sharing content associated with the target media content, wherein the target sharing content includes a media content generated, independent from a user editing operation, based on the target media content, the target sharing content including a first media content picture generated by applying a predetermined style to a second media picture in the target media content.

In some embodiments, controlling the posting of a target sharing content associated with the target media content includes: in response to the sharing request, presenting at least one state control, the state control characterizing a generation state and/or a posting state of the target sharing content; and controlling the posting of the target sharing content based on an operating state of the state control within a predetermined time.

In some embodiments, the operation state indicates: a detection of a first predetermined operation associated with the state control within the predetermined time, and/or a failure of detection of a second predetermined operation associated with the state control within the predetermined time.

In some embodiments, the detection of a first predetermined operation associated with the state control within the predetermined time includes: a detection, within the predetermined time, of a predetermined operation ceasing the presenting of the state control; and/or the failure of detection of a second predetermined operation associated with the state control within the predetermined time includes: a failure of detection, within the predetermined time, of an associated operation for the target sharing content that is triggered based on the state control.

In some embodiments, the process 400 further includes: ceasing the presenting of the state control; or changing a display of the state control to indicate an updated generation state and/or a posting state of the target sharing content.

In some embodiments, the process 400 further includes: in response to the sharing request, triggering a content generation process of generating the target media content.

In some embodiments, a length of the predetermined time is determined based on a time length required for the generation process.

In some embodiments, the state control includes an editing portal, and the process 400 further includes: in response to a triggering operation for the editing portal, presenting a first editing interface; and controlling the posting of the corresponding sharing content based on at least one operation in the first editing interface.

In some embodiments, controlling the posting of the corresponding sharing content based on at least one operation in the first editing interface includes: receiving at least one editing operation for an initial sharing content to generate an updated sharing content; and in response to a posting request for the updated sharing content, controlling the posting of the updated sharing content.

In some embodiments, the state control includes a revoking portal, and the process 400 further includes: in response to a triggering operation for the revoking portal, ceasing the posting of the target sharing content.

In some embodiments, the state control is presented in a presentation interface of the target media content, and/or the sharing request for the target media content is triggered based on a sharing operation in the presentation interface of the target media content.

In some embodiments, the process 400 further includes: in response to an editing request for the posted target sharing content, presenting a second editing interface for editing the posted target sharing content, the posted target sharing content including a media content posted as a user work.

In some embodiments, the second editing interface includes: a first control configured to add at least one visual element to the first media picture; and/or a second control configured to change the predetermined style applied to the second media picture.

In some other embodiments, the second editing interface further includes: a third control, configured to obtain predetermined audio information, where the predetermined audio generates the target sharing content in combination with the information of the target media content.

In some embodiments, receiving the sharing request for the target media content includes: presenting a target sharing portal associated with the target media content; and obtaining, based on a triggering operation for the target sharing portal, the sharing request for the target media content.

In some embodiments, presenting a target sharing portal associated with the target media content includes: presenting a sharing control in the presentation interface of the target media content; and in response to a triggering operation for the sharing control, presenting the target sharing portal.

In some embodiments, presenting a target sharing portal associated with sharing the target media content includes: in response to receiving a target interaction operation associated with the target media content, presenting the target sharing portal in the presentation interface of the target media content.

In some embodiments, the target interaction operation includes at least one of: a like operation, a comment operation, a favoriting operation, and a following operation.

In some embodiments, target sharing portal includes a sharing button displayed in a content presentation area of the presentation interface, the content presentation area being configured to play the target media content; and/or a sharing label displayed in a description area of the presentation interface, the description area being configured to display description information associated with the target media content.

In some embodiments, the predetermined style indicates the first media picture including the second media picture and at least one visual element, the at least one visual element being generated based on the target media content.

In some embodiments, the predetermined style indicates the second media picture being presented in a picture-in-picture manner in the first media picture.

### Example Apparatus and Apparatus

Embodiments of the present disclosure also provide a corresponding apparatus for performing the above method or process. FIG. 5 is a schematic structural block diagram of an apparatus 500 for sharing content according to some embodiments of the present disclosure. The apparatus 500 may be implemented or included in the electronic device 110. The various modules / components in the apparatus 500 may be implemented by hardware, software, firmware, or any combination thereof.

The apparatus 500 includes a receiving module 510 configured to receive a sharing request for a target media content. The apparatus 500 further includes a control module 520 configured to control, based on the sharing request, posting of a target sharing content associated with the target media content, wherein the target sharing content includes a media content generated, independent from a user editing operation, based on the target media content, the target sharing content including a first media content picture generated by applying a predetermined style to a second media picture in the target media content.

In some embodiments, the control module 520 is further configured to: in response to the sharing request, presenting a state control, the state control characterizing a generation state and/or a posting state of the target sharing content; and controlling the posting of the target sharing content based on an operating state of the state control within a predetermined time.

In some embodiments, the operation state indicates a detection of a first predetermined operation associated with the state control within the predetermined time, and/or a failure of detection of a second predetermined operation associated with the state control within the predetermined time.

In some embodiments, the detection of a first predetermined operation associated with the state control within the predetermined time includes: a detection, within the predetermined time, of a predetermined operation ceasing the presenting of the state control; and/or the failure of detection of a second predetermined operation associated with the state control within the predetermined time includes: a failure of detection, within the predetermined time, of an associated operation for the target sharing content that is triggered based on the state control.

In some embodiments, the control module 520 is further configured to: ceasing the presenting of the state control; or changing a display of the state control to indicate an updated generation state and/or a posting state of the target sharing content.

In some embodiments, the control module 520 is further configured to in response to the sharing request, triggering a content generation process of generating the target media content.

In some embodiments, a length of the predetermined time is determined based on a time length required for the generation process.

In some embodiments, the state control includes an editing portal, and the control module 520 is further configured to: in response to a triggering operation for the editing portal, present a first editing interface; and controll the posting of the corresponding sharing content based on at least one operation in the first editing interface.

In some embodiments, the control module 520 is further configured to: receiving at least one editing operation for an initial sharing content to generate an updated sharing content; and in response to a posting request for the updated sharing content, controlling the posting of the updated sharing content.

In some embodiments, the state control includes a revoking portal, and the control module 520 is further configured to: in response to a triggering operation for the revoking portal, ceasing the posting of the target sharing content.

In some embodiments, the state control is presented in a presentation interface of the target media content, and/or the sharing request for the target media content is triggered based on a sharing operation in the presentation interface of the target media content.

In some embodiments, the apparatus 500 further includes an editing module configured to: in response to an editing request for the posted target sharing content, presenting a second editing interface for editing the posted target sharing content, the posted target sharing content including a media content posted as a user work.

In some embodiments, the second editing interface includes: a first control configured to add at least one visual element to the first media picture; and/or a second control configured to change the predetermined style applied to the second media picture.

In some other embodiments, the second editing interface further includes: a third control, configured to obtain predetermined audio information, where the predetermined audio generates the target sharing content in combination with the information of the target media content.

In some embodiments, the receiving module 510 is further configured to: presenting a target sharing portal associated with the target media content; and obtaining, based on a triggering operation for the target sharing portal, the sharing request for the target media content.

In some embodiments, the receiving module 510 is further configured to: presenting a sharing control in the presentation interface of the target media content; and in response to a triggering operation for the sharing control, presenting the target sharing portal.

In some embodiments, the receiving module 510 is further configured to: in response to receiving a target interaction operation associated with the target media content, presenting the target sharing portal in the presentation interface of the target media content.

In some embodiments, the target interaction operation includes at least one of: a like operation, a comment operation, a favoriting operation, and a following operation.

In some embodiments, the target sharing portal includes a sharing button displayed in a content presentation area of the presentation interface, the content presentation area being configured to play the target media content; and/or a sharing label displayed in a description area of the presentation interface, the description area being configured to display description information associated with the target media content.

In some embodiments, the predetermined style indicates the first media picture including the second media picture and at least one visual element, the at least one visual element being generated based on the target media content.

In some embodiments, the predetermined style indicates the second media picture being presented in a picture-in-picture manner in the first media picture.

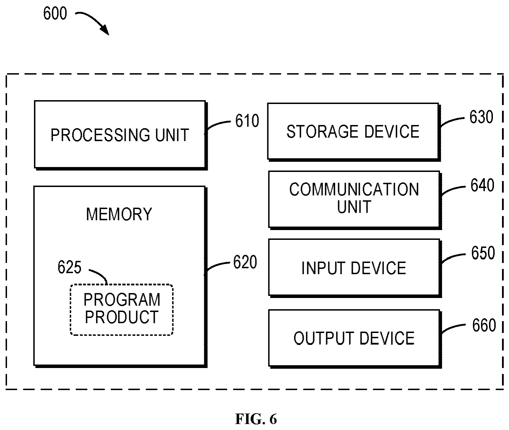

FIG. 6 illustrates a block diagram of an electronic device 600 in which one or more embodiments in the present disclosure may be implemented. It would be appreciated that the electronic device 600 illustrated in FIG. 6 is merely exemplary and should not constitute any limitation on the functionality and scope of the embodiments described herein. The electronic device 600 shown in FIG. 6 may be configured to implement the electronic device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 660, and one or more output devices 660. The processing unit 610 may be an actual or virtual processor capable of performing various processes according to a program stored in the memory 620. In a multiprocessor system, a plurality of processing units execute computer-executable instructions in parallel to improve the parallel processing capabilities of electronic device 600.

The electronic device 600 typically includes a variety of computer storage media. Such media may be any available media that are accessible to the electronic device 600, including, but not limited to, volatile and non-volatile media, removable and non-removable media. The memory 620 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 630 may be a removable or non-removable medium and may include a machine-readable medium, such as a flash drive, magnetic disk, or any other medium that can be used to store information and/or data and that can be accessed within the electronic device 600.

The electronic device 600 may further include an additional removable/non-removable, volatile/non-volatile storage medium. Although not shown in FIG. 6, a disk drive for reading from or writing to a removable, non-volatile magnetic disk (e.g., a "floppy disk") or an optical disk drive for reading from or writing to a removable, non-volatile optical disk may be provided. In these cases, each drive may be connected to a bus (not shown) by one or more data media interfaces. The memory 620 may include a computer program product 625 having one or more program modules configured to execute various methods or actions of the various embodiments in the present disclosure.

The communication unit 640 is configured to communicate with other electronic devices through a communication medium. Additionally, the functionality of components of the electronic device 600 may be implemented by a single computing cluster or multiple computing machines capable of communicating through a communication connection. Thus, the electronic device 600 may operate in a networked environment using a logical connection with one or more other servers, network personal computers (PCs), or another network node.

**-** The input device 660 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed. The external device, such as a storage device, a display device, etc., communicates with one or more devices that enable users to interact with the electronic device 600, or communicates with any device (e.g., a network card, a modem, etc.) that enables the electronic device 600 to communicate with one or more other electronic devices. Such communication may be performed via an input/output (I/O) interface (not shown).

According to example implementations in the present disclosure, a computer-readable storage medium having computer-executable instructions stored thereon is provided. The computer-executable instructions are executed by a processor to implement the method described above. According to example implementations in the present disclosure, a computer program product is further provided. The computer program product is tangibly stored on a non-transitory computer-readable medium and includes computer-executable instructions. The computer-executable instructions are executed by a processor to implement the method described above.

Various aspects in the present disclosure are described herein with reference to flowcharts and/or block diagrams of methods, apparatuses, devices, and computer program products implemented according to the present disclosure. It would be appreciated that each block of the flowchart and/or block diagram, and combinations of blocks in the flowcharts and/or block diagrams, may be implemented by computer readable program instructions.

These computer-readable program instructions may be provided to a processing unit of a general-purpose computer, special computer, or other programmable data processing apparatus to produce a machine that generates an apparatus to implement the functions/acts specified in one or more blocks in the flowchart and/or the block diagram when these instructions are executed through the processing units of the computer or other programmable data processing devices. These computer-readable program instructions may also be stored in a computer-readable storage medium. These instructions cause the computer, programmable data processing apparatus, and/or other devices to work in a specific way. Therefore, the computer-readable medium storing instructions includes an article of manufacture including instructions to implement aspects of the functions/acts specified in one or more blocks in the flowchart and/or block diagram(s).

The computer-readable program instructions may be loaded onto a computer, a programmable data processing apparatus, or a further device, such that a series of operational steps can be performed on the computer, programmable data processing apparatus, or the further device to produce a computer-implemented process. As such, the instructions executed on the computer, programmable data processing apparatus, or the further device implement the functions/acts specified in the one or more blocks in the flowchart and/or block diagram(s).

The flowchart and block diagrams in the drawings show the possible architecture, functions and operations of the system, the method, and the computer program product implemented according to various implementations in the present disclosure. In this regard, each block in the flowchart or block diagram may represent a part of a module, a program segment or instructions, which contains one or more executable instructions for implementing the specified logic function(s). In some alternative implementations, the functions marked in the blocks may also occur in a different order from those marked in the drawings. For example, two consecutive blocks may be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by a combination of a dedicated hardware and computer instructions.

Various implementations in the present disclosure have been described above. The above description is exemplary, not exhaustive, and the present application is not limited to the disclosed implementations. Without departing from the scope and spirit of the described implementations, many modifications and changes are obvious to those skilled in the art. The terminology used herein has been chosen to best explain the principles of the respective implementations, the practical applications or improvements to the technology in the marketplace, or to enable those skilled in the art to understand the implementations disclosed herein.

## Claims

1. A method of sharing content, comprising:
receiving a sharing request for a target media content; and
controlling, based on the sharing request, posting of a target sharing content associated with the target media content,
wherein the target sharing content comprises a media content generated, independent from a user editing operation, based on the target media content, the target sharing content comprising a first media content picture generated by applying a predetermined style to a second media picture in the target media content.

2. The method of claim 1, wherein controlling the posting of a target sharing content associated with the target media content comprises:
in response to the sharing request, presenting at least one state control, the state control characterizing a generation state and/or a posting state of the target sharing content; and
controlling the posting of the target sharing content based on an operating state of the state control within a predetermined time.

3. The method of claim 2, wherein the operating state indicates:
a detection of a first predetermined operation associated with the state control within the predetermined time, and/or
a failure of detection of a second predetermined operation associated with the state control within the predetermined time.

4. The method of claim 3, wherein the detection of a first predetermined operation associated with the state control within the predetermined time comprises: a detection, within the predetermined time, of a predetermined operation ceasing the presenting of the state control; and/or
the failure of detection of a second predetermined operation associated with the state control within the predetermined time comprises: a failure of detection, within the predetermined time, of an associated operation for the target sharing content that is triggered based on the state control.

5. The method of claim 2, further comprising:
ceasing the presenting of the state control; or
changing a display of the state control to indicate an updated generation state and/or a posting state of the target sharing content.

6. The method of claim 2, further comprising:
in response to the sharing request, triggering a content generation process of generating the target media content.

7. The method of claim 6, wherein a length of the predetermined time is determined based on a time length required for the generation process.

8. The method of claim 2, wherein the state control comprises an editing portal, and the method further comprises:
in response to a triggering operation for the editing portal, presenting a first editing interface; and
controlling the posting of the corresponding sharing content based on at least one operation in the first editing interface.

9. The method of claim 8, wherein controlling the posting of the corresponding sharing content based on at least one operation in the first editing interface comprises:
receiving at least one editing operation for an initial sharing content to generate an updated sharing content; and
in response to a posting request for the updated sharing content, controlling the posting of the updated sharing content.

10. The method of claim 2, wherein the state control comprises a revoking portal, and the method further comprises:
in response to a triggering operation for the revoking portal, ceasing the posting of the target sharing content.

11. The method of claim 2, wherein the state control is presented in a presentation interface of the target media content, and/or the sharing request for the target media content is triggered based on a sharing operation in the presentation interface of the target media content.

12. The method of claim 1, further comprising:
in response to an editing request for the posted target sharing content, presenting a second editing interface for editing the posted target sharing content, the posted target sharing content comprising a media content posted as a user content item.

13. The method of claim 12, wherein the second editing interface comprises:
a first control configured to add at least one visual element to the first media picture; and/or
a second control configured to change the predetermined style applied to the second media picture.

14. The method of claim 1, wherein receiving the sharing request for the target media content comprises:
presenting a target sharing portal associated with the target media content; and
obtaining, based on a triggering operation for the target sharing portal, the sharing request for the target media content.

15. The method of claim 14, wherein presenting a target sharing portal associated with the target media content comprises:
presenting a sharing control in the presentation interface of the target media content; and
in response to a triggering operation for the sharing control, presenting the target sharing portal.

16. The method of claim 14, wherein presenting a target sharing portal associated with sharing the target media content comprises:
in response to receiving a target interaction operation associated with the target media content, presenting the target sharing portal in the presentation interface of the target media content.

17. The method of claim 16, wherein the target interaction operation comprises at least one of: a like operation, a comment operation, a favoriting operation, and a following operation.

18. The method of claim 16, wherein the target sharing portal comprises:
a sharing button displayed in a content presentation area of the presentation interface, the content presentation area being configured to play the target media content; and/or
a sharing label displayed in a description area of the presentation interface, the description area being configured to display description information associated with the target media content.

19. The method of claim 1, wherein the predetermined style indicates the first media picture comprises the second media picture and at least one visual element, the at least one visual element being generated based on the target media content.

20. The method of claim 1, wherein the predetermined style indicates the second media picture is presented in a picture-in-picture manner in the first media picture.

21. An apparatus for sharing content, comprising:
a receiving module configured to receive a sharing request for a target media content; and
a control module configured to control, based on the sharing request, posting of a target sharing content associated with the target media content,
wherein the target sharing content comprises a media content generated, independent from a user editing operation, based on the target media content, the target sharing content comprising a first media content picture generated by applying a predetermined style to a second media picture in the target media content.

22. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 20.

23. A computer-readable storage medium having stored thereon a computer program which, executable by a processor to perform the method of any of claims 1 to 20.
